# EUROPEAN PATENT SPECIFICATION

(11) **EP 2 144 352 B1**
(45) Date of publication and mention of the grant of the patent: **11.02.2015**
(21) Application number: 09174427.6
(22) Date of filing: 07.05.2007
(51) Int. Cl.: H02K 15/06, H02K 15/00

(54) **Apparatus and methods for inserting coils and cover wedges in the slots of dynamoelectric machine cores**
VORRICHTUNG UND VERFAHREN ZUM EINFÜGEN VON SPULEN UND ABDECKKEILEN IN DIE SCHLITZE VON KERNEN DYNAMOELEKTRISCHER MASCHINEN
Appareil et procédé permettant d'introduire des spires et des cales de protection dans les fentes de noyaux de machines dynamoélectriques

(30) Priority: 09.05.2006 IT TO20060336
(43) Date of publication of application: 13.01.2010
(62) Divisional of application: 07734527.0
(73) Proprietor: ATOP S.p.A., 50021 Barberino Val d'Elsa (Firenze) (IT)
(72) Inventor: Ponzio, Massimo, 50021, Barberino Val d'Elsa (Firenze) (IT); Stratico, Gianfranco, 50021, Barberino Val d'Elsa (Firenze) (IT); Nesti, Paolo, 50021, Barberino Val d'Elsa (Firenze) (IT); Nugelli, Maurizio, 53037, Ulignano - San Gimignano (Siena) (IT)
(74) Representative: Notaro, Giancarlo

(56) References cited:
- GB-A- 1 445 728
- JP-A- 2000 116 078
- US-A- 4 571 822

## Description

### BACKGROUND AND SUMMARY OF THE INVENTION

The present application concerns apparatus and methods for manufacturing wound cores of dynamo electric machines. For example, the apparatus and methods may be used in the manufacture of stators for electric motors or alternators.

The apparatus and methods are particularly applicable to manufacturing techniques that include a first stage for preparing wire coils on an insertion tool and a later stage for transferring the wire coils from the insertion tool to slots within the core. Equipment and processes concerning this field of technology are described in commonly assigned U.S. patent No. 5,921,288.

The present apparatus and methods are particularly concerned with insertion of pre-wound coils in core slots. When inserting pre-wound coils in core slots, cover wedges are also inserted into the machine core slots. The cover wedges may act as back up surfaces that maintain coil wire turns in a compact state within the slots. Cover wedges act as an electrical insulator between the coils and a portion of the machine core that forms pole expansions at the slot openings.

Cover wedges are normally inserted into the slots simultaneously with, or soon after the insertion of the coils. Cover wedges are normally pushed by wedge insertion bars into portions of slots openings that are exposed on an end face of a stator. The wedge insertion bars generally translate in a direction parallel to the axis of the core bore.

Coils are normally inserted into slots by pushing their two side branches through a portion of respective slot openings that run along the bore interior from one stator end face to the other. Often, a pushing device that advances through the machine core bore is used to gradually lay the coil branches into the respective slots as the pushing device translates through the bore. At the end of this process, the coil heads, which join the coil branches to form the entire coil, are brought to span across the end faces of the core and to exit the slots of the coil branches being joined.

Within a single slot there may be more than a single coil branch inserted, therefore more than one coil is being inserted in the slots of the core. In such a situation, within the slots the wire turns of the coils are more compactly inserted and therefore generate increased resistance when moving the coil branches through the slots to reach the final coil position. As a result, also the cover wedges encounter increased resistance when moving along the slots to reach their final position.

With high wire fills in the slots, the increased mechanical resistance experienced by the cover wedges during movement can cause the cover wedges to be displaced insufficiently and therefore remain in final positions that are undesirable. This situation corresponds to leaving coils areas without insulation covering and can be detrimental to guaranteeing reliable insulation of the dynamoelectric machine. In cases of excessive mechanical resistance, the cover wedge can become crimpled, therefore damaged, which ultimately results in the machine core being a reject.

The apparatus known from US 3,872,568 inserts the wedges required for a long stator by using at least two insertion strokes of the coil pusher. During a first insertion stroke of the coil pusher, wedges of a first group, which are a fraction of the total wedges required by the stator, are inserted into the stator slots by a first movement device. Simultaneously, wedges of a second group are brought to an intermediate position by a second movement device so that the wedges of the second group can be inserted in the stator during a successive insertion stroke of the coil pusher.

This solution reduces the length of the blades required for inserting the wedges due to the use of two separate movement devices for the two groups of wedges, and because each movement device accomplishes only a portion of the total insertion stroke required for the wedges.

US 3,402,462 describes a solution for inserting two branches of pre-wound coils in the slots of a core by using a distinct pushing member for pushing each coil branch into the same slot of the core. The pushing member for pushing the first coil branch against the bottom of the slot is not provided with a radial movement.

The absence of a radial movement does not allow full pressing of the first coil branch against the bottom of the slot and the first pushing member can not move backwards through the core after the insertion stroke.

### Summary of the Invention

It would therefore be desirable to insert pre-wound coils and cover wedges in machine core slots in a manner that reduces the likelihood that the cover wedges become displaced insufficiently, or that the cover wedges become damaged during the insertion process.

It would also be desirable to simultaneously insert pre-wound coils and cover wedges in machine core slots in a manner that the coil branches are correctly positioned within the slots of the machine core and the coil heads are correctly positioned beyond the core ends.

The mentioned objectives are particularly necessary for insertion operations which need to be accomplished in short timing, with high conductor fill in the slots, and for compactly sized cores.

With the invention the machine core having a bore, which needs to receive the coils and the cover wedges, can be supported by a component mount. A first pusher assembly having an insertion stroke for advancing through the bore parallel to the longitudinal axis of the bore can insert the multiple coil branches into the slots. The first pusher assembly can be provided with multiple pushing surfaces distanced in a direction parallel to the longitudinal axis for pushing respective coils through the bore.

The first pusher assembly is provided with arms for pushing the cover wedges and the coil branches into the core slots. The arms are radially moveable with respect to the core to push initially inserted coil branches well into the depth of the slots.

Coil guides are configured to guide the coils during the insertion stroke. A wedge pusher assembly is configured to push the cover wedges into the slots simultaneously, or soon after the insertion of the coils. The wedge pusher assembly comprises means for pushing a first group of wedges with a first sequence of motion and means for pushing a second group of wedges with a second sequence of motion during the same insertion stroke for inserting the coils. The groups of wedges are meant to be inserted with specific coils of the multiple coils present.

Forms can be located in specific portions of the slots so that during an insertion stroke coil branches will not be able to occupy the spaced occupied by the forms. The forms can be removed prior to accomplishing a successive insertion operation so that coil branches inserted successively find exact space where to be located and therefore encounter less resistance during insertion.

To insert all the necessary coil branches in a core, plural insertions strokes, each for different groups of coils may be required. In this situation, a number of sets of forms can be present in portions of the slots during the first insertion stroke. After the first insertion stroke, a set of form can be removed to present the exact space where a further group of coils need to be located during a successive insertion stroke. The removal of the other set of forms followed by insertions of further coil branches can continue.

It is an object of the invention to provide apparatus and methods for inserting pre-wound coils and cover wedges in machine core slots in a manner that reduces the likelihood that cover wedges will be insufficiently displaced, or that cover wedge become damaged during the coil insertion operations.

It is a further object of the invention to provide apparatus and methods for inserting pre-wound coils and cover wedges so that multiple coil branches can be inserted in a same slot of the core.

### BRIEF DESCRIPTION OF THE DRAWINGS

The above and other objects and advantages of the invention will be apparent upon consideration of the following detailed description, taken in conjunction with the accompanying drawings.
Figure 1 is a perspective view of a machine core that can be manufactured according to the principles of the invention by insertion of pre-wound coils and cover wedges.
Figure 2 is a partial perspective view showing an enlargement of area 2 of figure 1 with multiple coil branches exiting a slot of the core, and with the cover wedges correctly positioned as a result of applying the principles of the invention.
Figure 3 is a schematic view in which an empty core and the various coils and cover wedges have been extended in a planar view. The coils, the cover wedges and the wedge insertion rods are shown positioned prior to insertion and ready to be inserted according to the principles of the invention
Figure 4 is a perspective partial view, illustrating the various parts of the insertion apparatus of the invention positioned in relation to a core shown with dashed line representation.
Figure 5 is a perspective view similar to the view of figure 4, illustrating a coil pusher member of the invention with certain parts more darkly shadowed to distinguish them for an illustration of their specific function.
Figure 6 is a view similar to the view of figure 5 although augmented to illustrate a number of coils positioned in association with the more darkly shadowed parts of figure 5.
Figure 7 is a partial section view as seen from lines 7-7 of figure 4 illustrating a stage in which a pair of coil branches and a cover wedge are being inserted into a slot of the core according to the principles of the invention.
Figure 8 is a partial section view as seen from lines 8 - 8 of figure 4 illustrating a stage in which another pair of coil branches and a cover wedge are being inserted into a slot of a core according to the principles of the invention.
Figure 9 is a partial section view as seen from directions 9 - 9 of figure 10 with certain parts omitted for reasons of clarity. Figure 9 is also a continuation of a bottom portion of figure 8
Figure 10 is a plan view as seen from directions 10 - 10 of figure 9, with certain parts omitted for reason of clarity,
Figure 11 is a view similar to the view of figure 8, illustrating a further embodiment of a device for pushing coil branches into the slots of a core,
Figure 12 is a section view from direction 12 - 12 of figure 11 illustrating more in detail the portion for pushing of the device of figure 11, with certain parts omitted for sake of clarity,
Figure 13 is a perspective view of a solution according to the invention for positioning coil branches in required areas of a core during insertion operations, the equipment for inserting the coils which is shown in figure 4, being however omitted here, for reasons of clarity,
Figure 14 is an elevation view from direction 14 of figure 13, and
Figures 15 - 18 are views from direction 15 - 15 of figure 14 illustrating various stages of insertion of coil branches in the slots of a core by performing a sequence of operations with the solution of figure 13 and 14.

### DESCRIPTION OF THE PREFERRED EMBODIMENTS

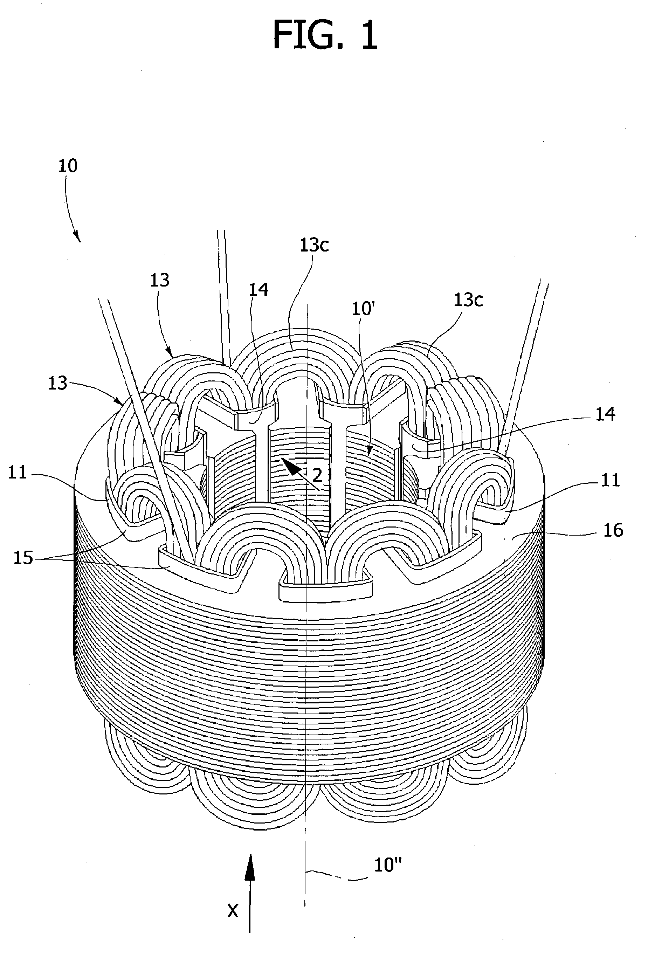

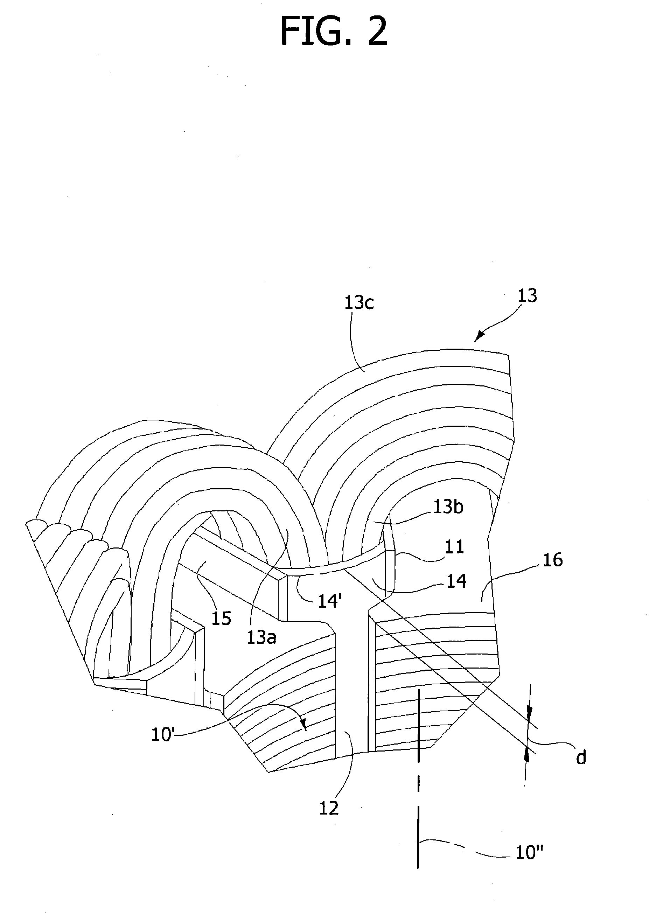

The core 10 shown in figure 1 is formed from a stack of laminations configured to have bore 10', slots 11 and openings 12 oriented towards the central longitudinal axis 10'' of the core. Prior to inserting branches of pre-wound coils 13 and cover wedges 14 in the slots, insulation lining 15 is placed along the walls of the slots 11. In modern stators it is customary to have at least two internal coil branches like 13a and 13b inserted in a single slot of the core (see figure 2). The head 13c of a coil can extend to an adjacent slot, like is shown in the figures of this application, or to more distant slots, depending on the angular pitch of the coils that need to be wound for the core.

Figure 2 shows a correct insertion result in which cover wedges 14 have been positioned along a slot so that ends 14' of the cover wedges are protruding sufficiently beyond end face 16 of core 10. To reach this final position as shown in figure 2, the cover wedges have been previously displaced with the coils in direction X parallel to the longitudinal axis 10" during an insertion operation.

Due to the presence of multiple coil branches like 13a and 13b in slots 11 and the high number of wire turns that the coils may have, insertion of the coil branches and the cover wedges occurs with an increased mechanical resistance that generates high opposing forces on the wire turns and the cover wedges when these tend to move through the slots to reach their final position shown in figure 2.

The insertion of the cover wedges occurs practically simultaneously with the insertion of the wire coils, although the cover wedges tend to trail behind the coils in the course of the travel of an insertion operation. The wire turns of the coil branches being inserted react to being forced into the narrow space of a slot and tend to bulge towards the slot openings 12, i.e. towards the forward area of the slot, where the cover wedges are supposed to find spacing for their motion and final positioning. At the same time, certain wire turns of the coils may not be displaced sufficiently towards the bottom of the slots and therefore occupy the forward space of the slots where the cover wedges are supposed to move. These are situations that cause the cover wedges to be displaced insufficiently along the slot, and therefore be positioned with distance d that is insufficient (see figure 2). An incorrect position of the cover wedges due to an insufficient distance d means that the cover wedges will not protrude sufficiently from the slot of the core, or may not protrude at all from the slots.

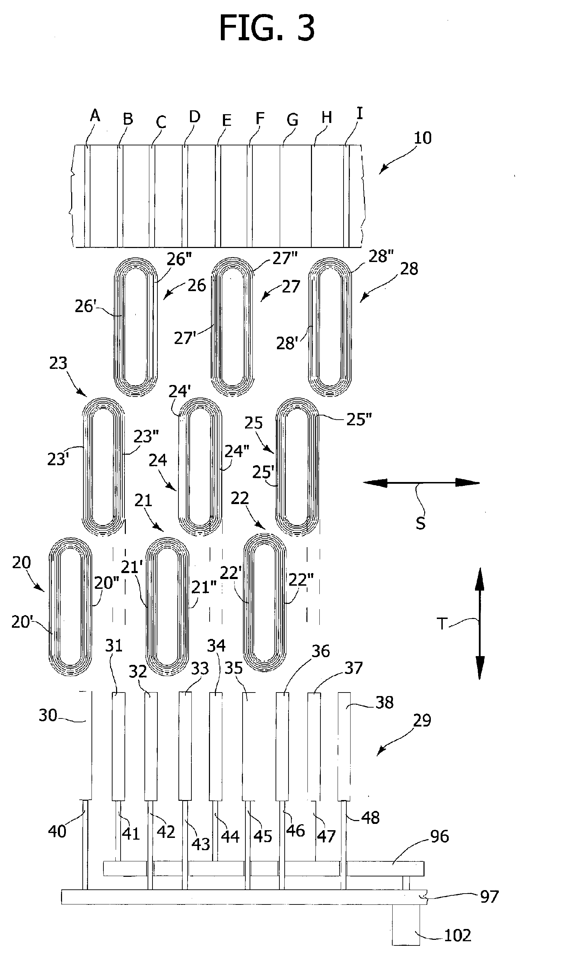

Figure 3 shows coils like 20 - 28 and cover wedges like 30 - 38, all of which can be inserted in slots A - I of core 10 in a single insertion operation. The numbering of the coil branches are referenced with the single hyphen or double hyphen. Pairs of coil branches are aligned with respect to each other, with the slot where they will be inserted and with the respective cover wedge that will be inserted in the same slot. As an example, with reference to figure 3, coil branch 20'', coil branch 23 ' and cover wedge 30 are all aligned with slot A, where they will be inserted. Another example, with reference to figure 3, coil branch 20', coil branch 28" (the left side of figure 3 continues on the right side of figure 3), and cover wedge 38 are all aligned with slot I where they will be inserted.

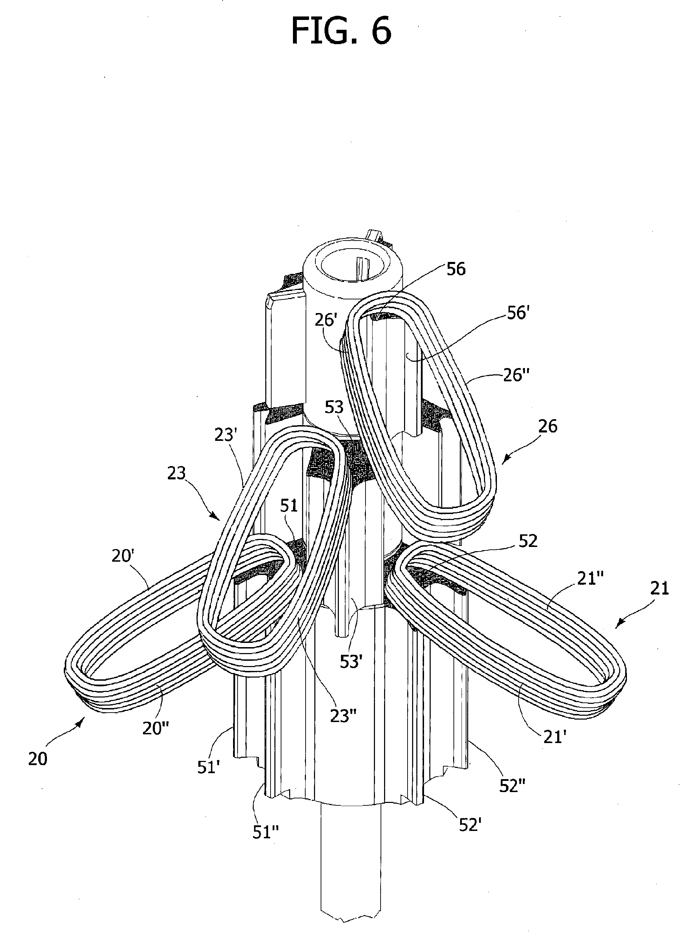

Cover wedges 30 - 38 are shown aligned with each other at level 29, as they result positioned in an insertion tool(shown in figure 6) in preparation for the insertion operation. Below the cover wedges, wedge insertion rods 40 - 48 are each aligned with a respective cover wedge for pushing the respective cover wedge along the insertion path that will bring it to the final position shown in figure 2

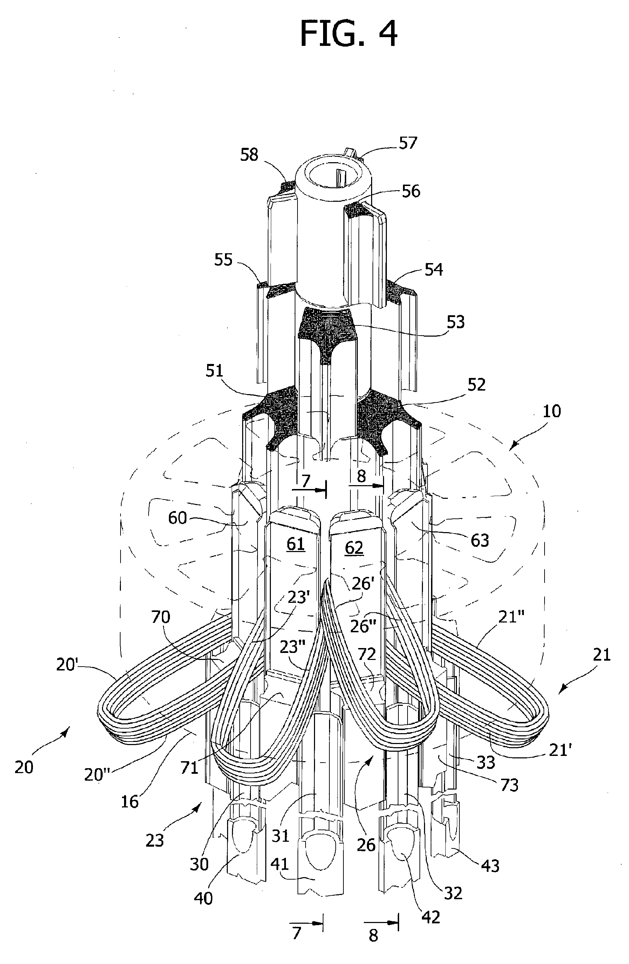

In figure 3, the side by side positioning of the coils in direction S, and the top to bottom positioning of the coils in directions T, derives from how the coils are angularly located on a traditional cylindrical insertion tool (see figure 4 and 6) as a result of a winding operation. For example, Coils 20, 21 and 22 can be wound in a first winding sequence, i.e. one after the other on a template and from there be discharged to be positioned equidistant angularly on the insertion tool at a first plane level, with their coil branches located in respective spacing between coil guides (see a spacing like 60 for coil branch 20').

In figure 4, the branches of coils 20 and 21 are shown respectively within the lateral spacing of coil guides 60 and 63, whilst coil 22 remains hidden.

Coils 23, 24, 25 can be wound in a second winding sequence and can be positioned equidistant angularly on the insertion tool surmounting coils like 20, 21 and 22 at a second plane level. In figure 4, coil 23 is shown positioned with branches 23' and 23" in spacing of coil guide 61. Coils 24 and 25 remain hidden in figures 4 and 6. Coils 26, 27 and 28 can be wound in a third sequence, and are positioned equidistant angularly on the insertion tool and surmounting the other coils at a third level. For example, in figure 4, coil 26 is shown positioned with branches 26' and 26" in the spacing of coil guide 62. It is to be noted that branches 23" and 26', which need to be inserted in the same slot are in the same spacing formed between coil guides 61 and 62.

Cover wedges 30 - 33 are also visible in figure 4, positioned between cover wedge guides like 70 - 74. As shown in figure 4 wedge push rods 40 - 43 are in abutment with the underside of a respective cover wedge and will run between wedge guides like 70 - 74 to push the cover wedges during insertion.

Furthermore, as shown in figure 4, prior to an insertion operation core 10 is placed so that one its faces 16 is supported by the top ends of wedge guides like 70 - 74. Pairs of opposite wedge guides and the coils guides are referenced dimensionally with respect to each other and will be registered with respective poles of the core as shown in figure 4. In this way, each of the spacing between the coil guides will be in accurate alignment with respective openings 12 of core 10.

The invention inserts the various coils in the slots so that pushing forces are favorable to placing the coil branches in required positions of the slot at predetermined instances of the insertion operations. In this way, the cover wedges find less obstruction in their motion during the insertion operation and also the necessary slot space to become positioned like is shown in figure 2.

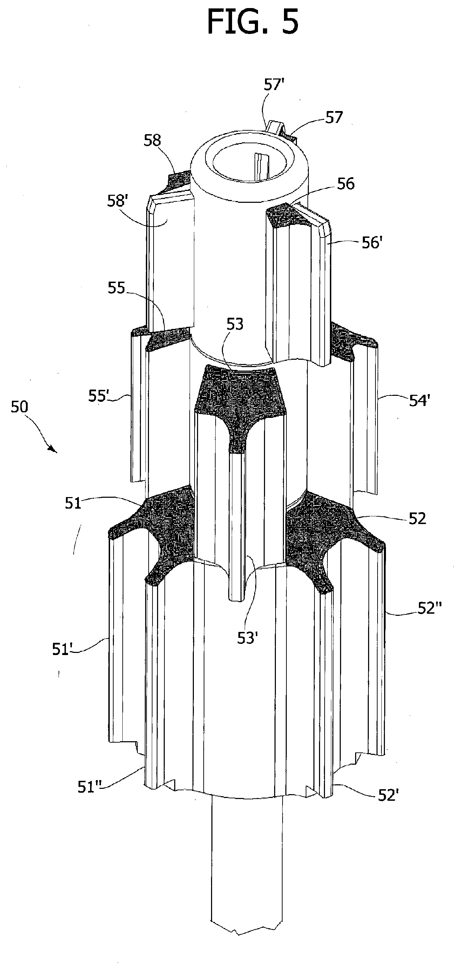

Figure 5 shows a coil pusher member 50 for pushing on the various coils so that the motion of the coils occurs more favorably for positioning the various coil portions in required positions of the slots at predetermined instances of the insertion process. Pusher member 50 is also shown in figures 4 and 6.

With reference to figures 4, 5 and 6, ledge surfaces 51 and 52 at a first axial level of member 50 are used to support and push respective coils 20 and 21 . A similar ledge surface (hidden in figure 5) is present at the same level, although angularly displaced, for supporting and pushing coil 22.

Arms 51' and 51" of the pusher member 50 extend radially, at each side and below with respect to the structure of ledge surface 51. Similarly, arms 52' and 52" extend radially, at each side and below with respect to the structure of ledge surface 52. Similar arms are present for the hidden ledge surface which supports and pushes coil 22.

Ledge surfaces 53, 54 and 55 are at a second axial level of member 50 and are used to support and push respective coils 23, 24 and 25. Surfaces 54 and 55 are partially hidden in figures 4, 5 and 6, however it should be contemplated that they are similar to surface 53.

Arms 53', 54', and 55' are centered and extend below with respect to the structure of ledge surface 53, 54, 55, respectively.

Ledge surfaces 56, 57 and 58 are at a third axial level of member 50 and are used to support and push respective coils 26, 27, and 28. Surfaces 57 and 58 are partially hidden in figures 4, 5 and 6, however it should be contemplated that they are similar to surface 56.

Radially expandable arms 56', 57' and 58' are also present, and respectively adjacent to the structures of ledge surface 56, 57 and 58

In figure 4 coil pusher member is shown in a final position of the insertion process, as would result at the end of its stroke in direction X after having pushed the coils into the slots of core. Therefore, the representation of coil pusher member 50 in figure 4 is false when compared with the fact that in the same figure the coils are shown prior to being inserted in the slots. The reason for this false representation is for sake of clarity and assistance in illustrating how the coil pusher member needs to be oriented and aligned with respect to longitudinal axis 10' and the various members present in figure 4 for accomplishing the insertion operation. More particularly, the various arms 51' , 51", 52' , 52", 53' , 54' and 55' need to be aligned with respective spacing existing between coil guides like 60, 61, 62 and 63. These various arms will run through the spacing existing between coil guides like 60, 61, 62 and 63 to insert the coils and the cover wedges into slots A - I. Therefore, prior to initiating an insertion operation, and when the coils are already positioned on the insertion tool as shown in figure 4, the coil pusher member 50 will be below the core and below all the possible coils that will need to be supported and pushed by the ledge surfaces which have been described in the foregoing.

The representation of the coils in figure 6 is meant to assist in illustrating how certain ledge surfaces will engage respective coils as the coil pushing member moves in direction X during insertion. In this way the ledge surfaces will be supporting and pushing the coils. Furthermore the arms associated with the ledge surfaces will be pressing the coil branches. For example, and still with reference to figure 6, ledge surface 51 will be pushing coil 20, whilst arms 51' and 51" will be respectively pressing on coil branches 20' and 20". Ledge surface 53 will be pushing coil 23, whilst arm 53' will be pressing on coil branches 23". Similarly, ledge surface 52 will be pushing coil 21, whilst arms 52' and 52" will be respectively pressing on coil branches 21' and 21". Ledge surface 56 will be pushing coil 26, whilst radially expandable arm 56' will be respectively pressing coil branch 26".

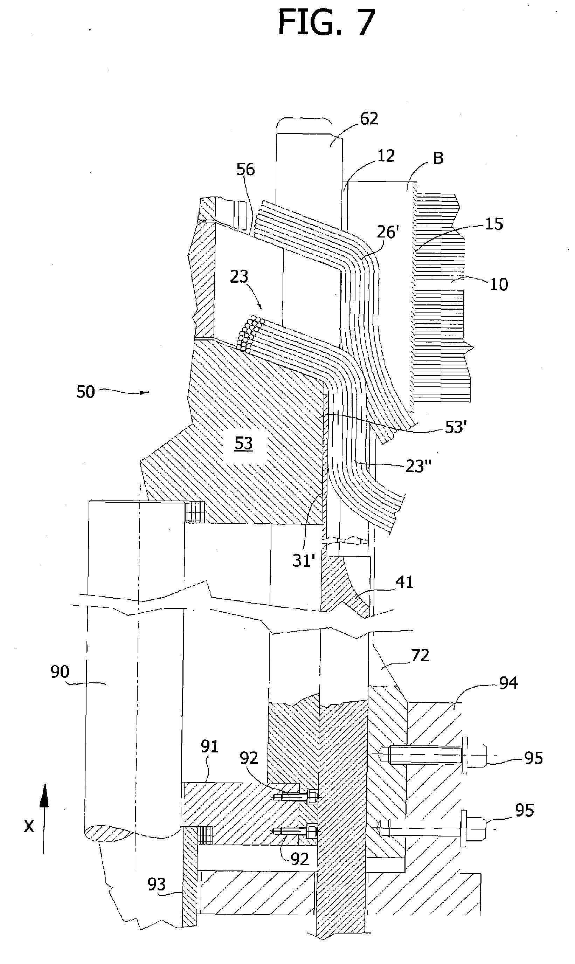

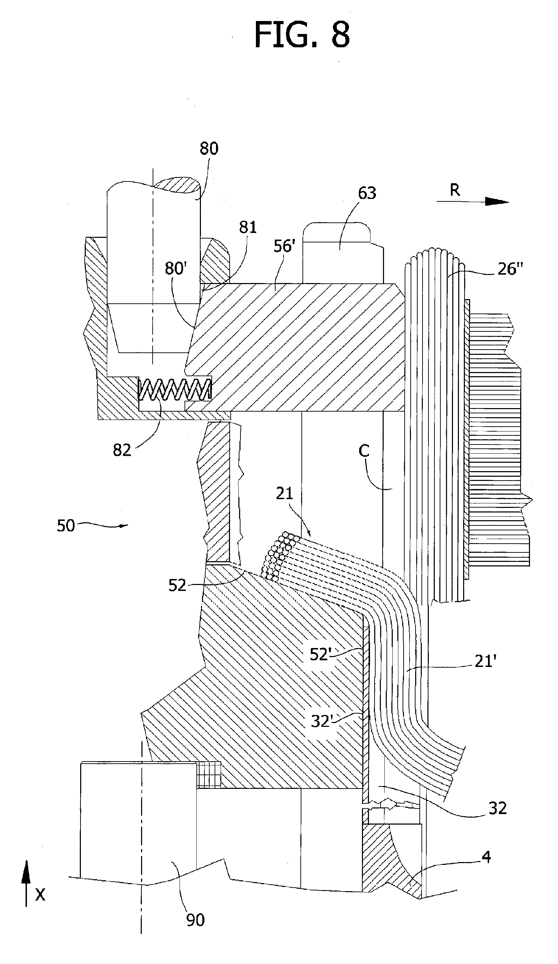

Figure 7 shows an instant of the movement of coil pusher member in direction X to insert branch 23" of coil 23 and branch 26' of coil 26 in slot B. Ledge surface 53 is supporting and pushing coil 23 through the core. Arm 53' is radially forcing cover wedge 31 and branch 23" of coil 23 in slot B by pressing through opening 12 of slot B. At the same time ledge surface 56 is supporting and raising coil 26 through the core. The radial forces on branch 23" produces forcing on branch 26' of coil 26 in order to push branch 26' towards the bottom of slot B. In addition, branch 26' is being assisted in moving towards the bottom of slot B by the pushing action being exerted on branch 26" by radially expandable arm 56' occurring in the adjacent slot C (see figure 8).

In the situation of figure 7, cover wedge 31 is immediately adjacent to portion of branch 23" that is entering slot B. This is possible because cover wedge 31, by means of a programmed pushing action of wedge pusher rod 41 in direction X has been moved to find appointment with the insertion of branch 23". In fact, a considerable extent of the length of cover wedge (see length portion 31') is adjacent to branch 23", and is therefore being pushed by arm 53' when pushing is occurring on branch 23" In this way, cover wedge 31 will find less resistance to movement and also the spacing for movement as branches 23" and 26' move through slot B.

Figure 8 shows an instant of the movement of coil pusher member in direction X to insert branch 21' of coil 21 and branch 26" of coil 26 in slot C. Ledge surface 52 is supporting and raising coil 21 through the core. Arm 52' is radially forcing cover wedge 32 and branch 21' of coil 21 in slot C. At the same time, ledge surface 56 (not visible in figure 8, although visible in figure 7 has supported and raised coil 26 through the core.

Radial expandable arm 56' has also moved in radial direction R to force branch 26" to the bottom of slot C. This will create space that assists a successive complete insertion of branch 21' and of cover wedge 32 in slot C. Cover wedge 32 is immediately adjacent to portion of branch 21' that is entering slot C. This is possible because cover wedge 32, by means of a programmed pushing action of wedge pusher rod 42 in direction X, has been moved to find appointment with the insertion of branch 21'. In fact, a considerable extent of the length of cover wedge 32 (see length portion 32') is adjacent to branch 21', and is therefore being pushed by arm 52' when pushing is occurring on branch 21' In this way, cover wedge 32 will find less resistance to movement and also the spacing for movement as branches 21' and 26" move through slot B

As shown in figure 8, radial expandable arm 56' can be caused to move in radial direction R by engagement of conical surface 80' of shaft 80 with slanted surface 81 of the end of arm 56'. Shaft 80 becomes inserted in end bore 82 of coil pusher member 50 so that engagement of the conical surface 80' with slanted surface 81 occurs at a predetermined position of the stroke of coil pusher member in direction X, which will achieve that radial expandable arm 56' moves in radial direction R at an instant that optimizes forcing branch 26" to the bottom of slot C and therefore assist the complete insertion of branch 21' and cover wedge 32. Reentrance of radial expandable arm 56' in direction opposite to R when shaft 80 removes engagement with surface 81, can occur with spring 82 which has been previously pulled by arm 56' when moving in direction R.

With reference to figure 7 and 8, coil pusher member 50 is shown fixed to an end of shaft 90, whilst coil guides like 62 and 63 can be fixed to a base ring 91 by means of bolts 92. Base ring 91 is fixed to an end of tube 93. Wedge guides like 72 are fixed to a platform structure 94 by means of bolts like 95.

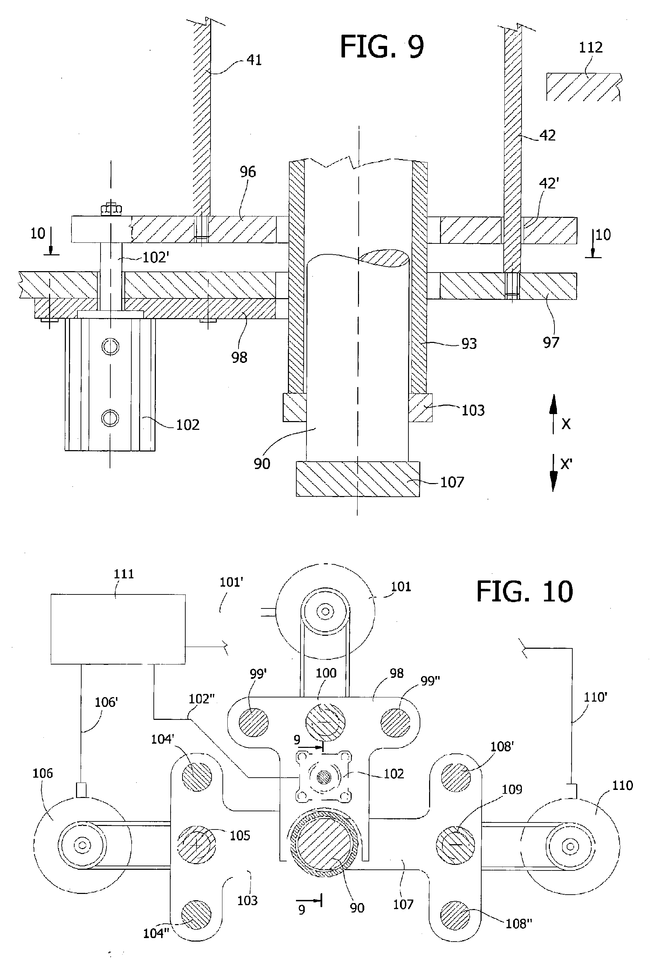

With reference to figure 9, wedge pusher rod 41 is fixed to a first support plate 96, whilst wedge pusher rod 42 is fixed to a second support plate 97. The many other wedge pusher rods present on first support plate 96 and second support plate 97 are not shown for reasons of clarity. However they can be envisioned as a circular array of rods in which some are fixed to first support plate 96 whilst other are fixed to second support plate 97 (see also figure 3). Those fixed to second support plate 97 extend through passage like 42' of support plate 96 to allow them to extend through first support plate 96. In this way there can be relative motion between first support plate 96 and second support plate 97,and therefore relative motion between the wedge pusher rods fixed to support plate 96 and the wedge pusher rods fixed to second support plate 97.

Second support plate 97 is fixed to carriage 98 (see also figure 10), which can be translated in direction X by being guided with guide rods 99' and 99". Movement in direction X and opposite direction X' occurs with screw/sleeve arrangement 100 driven by belt motor unit 101. Carriage 98 has fixed to it a linear actuator 102 (shown with dashed line representation in figure 10), the shaft 102' of which is fixed to first support plate 96. By powering actuator 102, shaft 102' extends or retracts to cause relative motions in direction X and opposite direction X' between first support plate 96 and second support plate 97.

Tube 93 is fixed to carriage 103 which can be translated in direction X and opposite direction X' by being guided with guide rods 104' and 104". Movement of carriage 103 in direction X and opposite direction X' occurs with screw/sleeve arrangement 105 driven by motor belt unit 106.

Shaft 90 is fixed to carriage 107 which can be translated in direction X and opposite direction X' by being guided with guide rods 108' and 108".

Movement of carriage 107 in direction X and opposite direction X' occurs with screw/sleeve arrangement 109 driven by motor belt unit 110.

Motors 101, 110, 106 and actuator 102 are powered by respective power lines 101', 110', 106' and 102' connected to controller and power drive unit 111.

A typical sequence which can be powered by an algorithm of unit 111 for simultaneous insertion of the coils shown in figure 3 can start from when the coils have been discharged on an insertion tool like is shown in figure 4.

As soon as motors 101, 106 and 110 are actuated, actuator 102 can also be powered to cause shaft 102' to be fully extended, thereby causing ends of wedge pusher rods fixed to the first support plate 96 to be moved ahead of the wedge pusher rods fixed to second support plate 97. This will result in wedges 31, 34, 37 moving in direction X ahead of the other wedge being pushed by second support plate 97. In this way it is possible to have wedges 31, 34 and 37 meet the appointment of moving adjacent to respective coil branches 23", 24" and 25" when the latter start to enter opening of the respective slots where insertion needs to occur. In this way extensive lengths of wedges 31, 34, 37 will be pushed by respective arms 53", 54" and 55" when pushing the coils branches occurs like is described with reference to figure 7. By moving cover wedges 31, 34, 37 as described, these will reach their final position in the slots, like is shown in figure 2, before the other wedges being pushed by wedge pusher rods of second support plate 97 reach their final position. At a position along the course of travel in direction X of first support plate 96, the latter can encounter an abutment stop 112, which will stop further travel of first support plate 96 in direction X. This position of the first support plate can correspond to the final position of cover wedges pushed by rods of first support plate 96. At the same time as the abutment occurs, actuator 102 can be powered to allow retraction of shaft 102' against the pushing force of carriage 98 so that wedge pusher rods of second support plate 97 can continue to push the cover wedge that still need to reach the final position shown in figure 2.

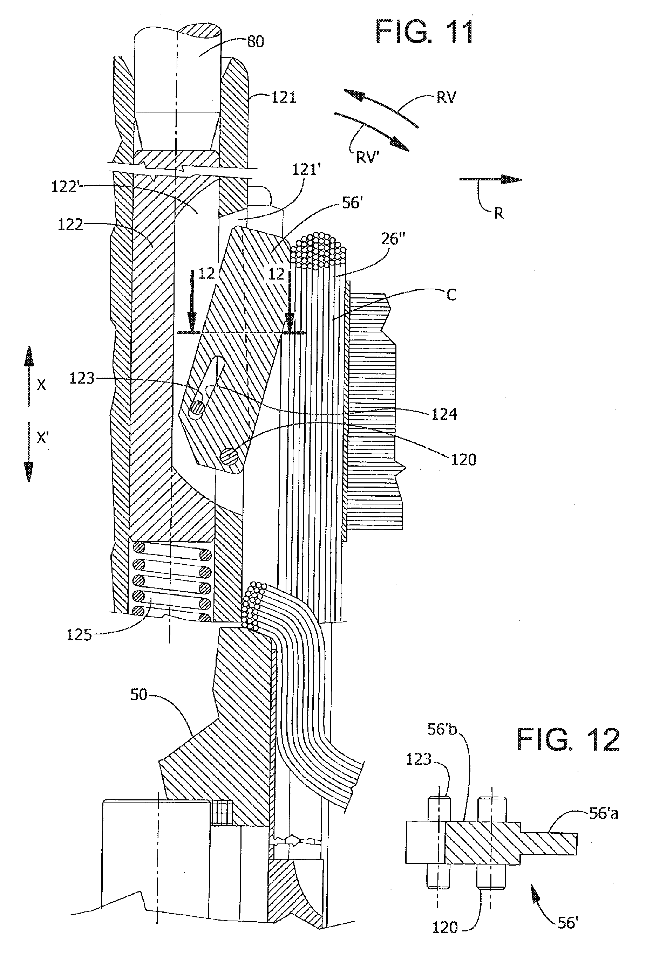

Figure 11 illustrates radial expandable arm 56' pressing on branch 26" to force branch 26" to the bottom of slot C. Radial expandable arm 56' projects through window 121' of tube 121 and is hinged by means of pin 120 to tube 121.

Tube 121 can be a projection of coil pusher member 50. Shaft 122 is seated in tube 121 and is capable of moving in directions X and X' relative to tube 121. Pin 123 fixed to shaft 122 inside seat 122' engages in slot 124 of arm 56'. Arm 56' is received in seat 122' of tube 122. Under the bias in direction X of spring 125 on shaft 122, pin 123 pushes the sides of slot 124 so that arm 56' rotates on pin 120 in direction RV to be seated in seat 122' of shaft 122.

Similarly, arm 56' is caused to rotate in opposite direction RV' to move in radial direction R in order to reach the condition shown in figure 11. This can be achieved by moving shaft 122 in direction X' by engagement with shaft 80 like has been described with reference to figure 8 during motion of pusher member 50' in direction X. Movement of shaft 122 in direction X' causes pin 123 to push on an opposite side of slot 124 (since slot 124 is inclined relative to direction X-X' even when arm 56' is seated in seat 122') so that arm 56' is rotated in direction RV' to press on the coil branch.

Figure 12 illustrates that arm 56' can have a narrow portion 56'a for passing through the opening 12 of slot C and a wider portion 56'b where slot 124 and the bore for pin 120 can be machined.

The rotation motions of arm 56' in direction RV' to accomplish movement in radial direction R, and the particular mechanism used to move arm 56', as described with reference to figure 11, achieve a movement solution for arm 56' in direction R that is compact for fitting in a small available space given by the size of the bore of core 10.

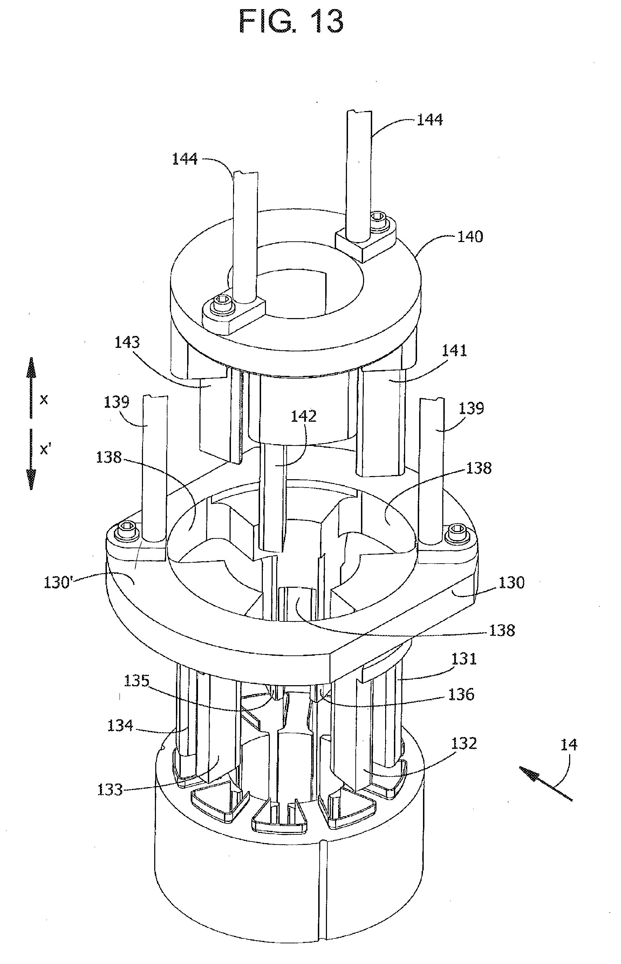

Figures 13 - 18 illustrate a solution for guaranteeing that branches of the coils occupy predetermined spacing within the slots of the core as a result of multiple insertion operations. According to this solution certain coil branches that are inserted in the slots as a result of a first insertion operation will not occupy spacing of the same slots that need to be occupied by coil branches inserted in following insertion operations.

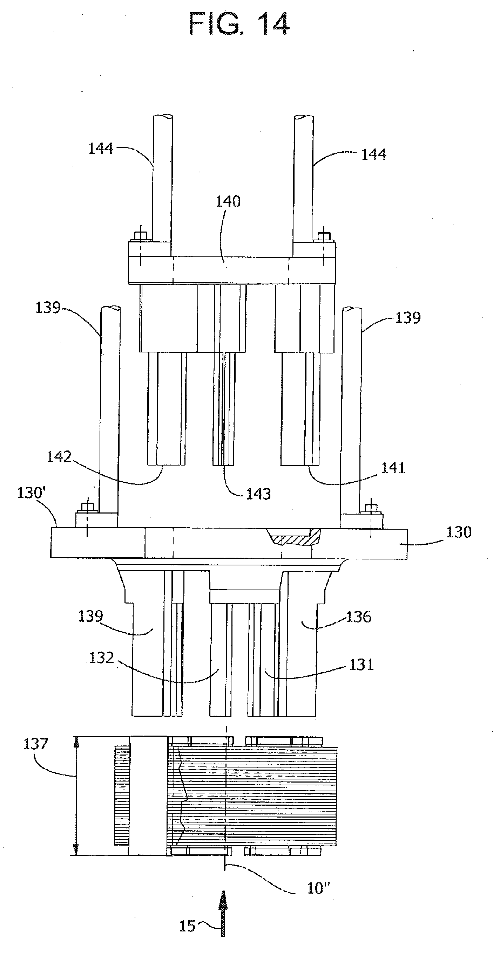

Figure 13 and 14 show flanges 130 and 140. Flange 140 carries forms 141 - 143, where each form is configured to be received in a respective portion of a slot so that it occupies with precision the space that would normally be occupied by the branch of a coil belonging to a set of coils that need to be inserted during a first insertion stroke of a pusher member like 50.

Similarly, flange 130 carries forms 131 - 136, where each form is configured to be received in a respective portion of a slot so that it occupies with precision the space that would normally be occupied by the branch of a coil belonging to another set of coils that need to be inserted during a successive insertion stroke of a pusher member like 50.

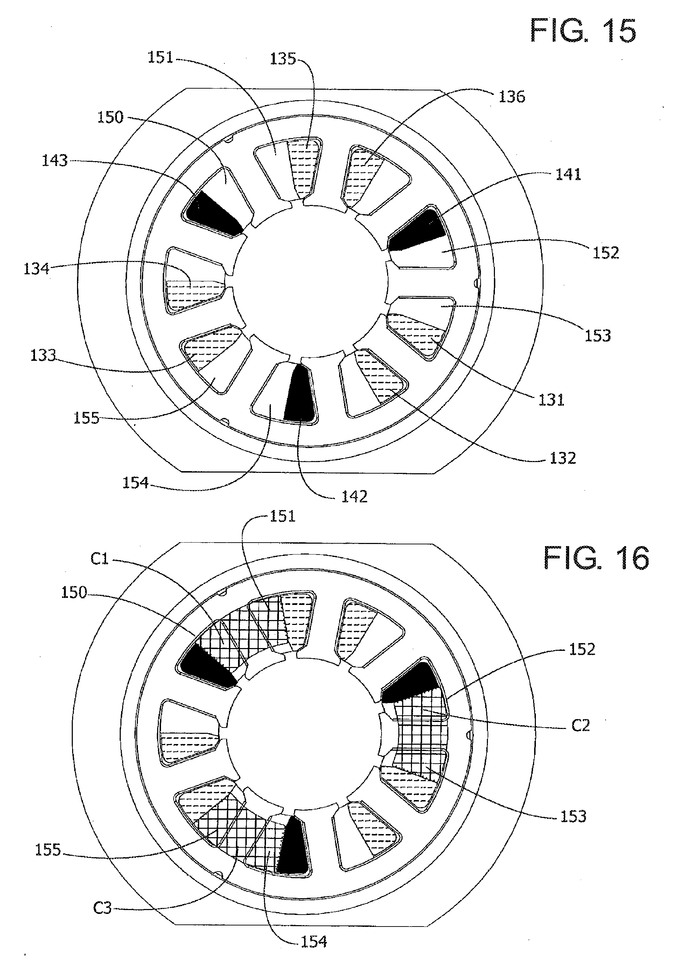

When the forms 131 - 136 need to be positioned in the slots of the core, as shown in figures 15 - 17, flange 130 is positioned by moving it in direction X' parallel to the longitudinal axis of the core until the underside of flange 130 is at a predetermined distance from core face 16. This distance guarantees that flange 130 does not occupy the space where the heads of the coils become definitely positioned during the insertion operation, and also that forms 131- 136 occupy at least the entire length 137 of the respective slots where they need to be inserted (see also figure 14).

Arms 139 connect flange 130 to a programmable and controlled movement assembly (not shown) for positioning forms 131 - 136 in the manner that has been described, and for removing forms 131 - 136 from the slots by moving flange 130 in direction X.

When forms 141 - 146 need to be positioned in the slots of the core, as shown in figures 15 - 16, flange 140 is positioned by moving it in direction X' parallel to the longitudinal axis of the core until the underside of flange 140 is at a predetermined distance from the upper face 130' of flange 130. This distance guarantees that that forms 141-143 occupy at least the entire length 137 of the respective slots where they are inserted.

Arms 144 connect flange 140 to a second programmable and controlled movement assembly (not shown) for positioning forms 141 - 143 in the manner that has been described, and for removing forms 141 - 143 from the slots by moving flange 140 in direction X.

Figure 15 shows the condition of having positioned forms 131- 136 and 141 - 143 in respective slots of the stator core. To reach this condition, forms 141 - 143 have passed through spacing 138 existing between the upper portions of forms 131- 136 (see figure 13). The condition shown in figure 15 is that prior to inserting coil branches in spacing 150 - 155 of the slots. As shown in figure 15 and 16 these spacing are either adjacent to forms 131 - 136 or to forms 141 - 143.

The result of inserting coil branches in spacing 150 - 155 of the slots is shown in figure 16, where coil branches in spacing 150 and 151 form a single coil C1, branches in spacing 152 and 153 form a single coil C2 and branches in spacing 154 and 155 form a single coil C3.

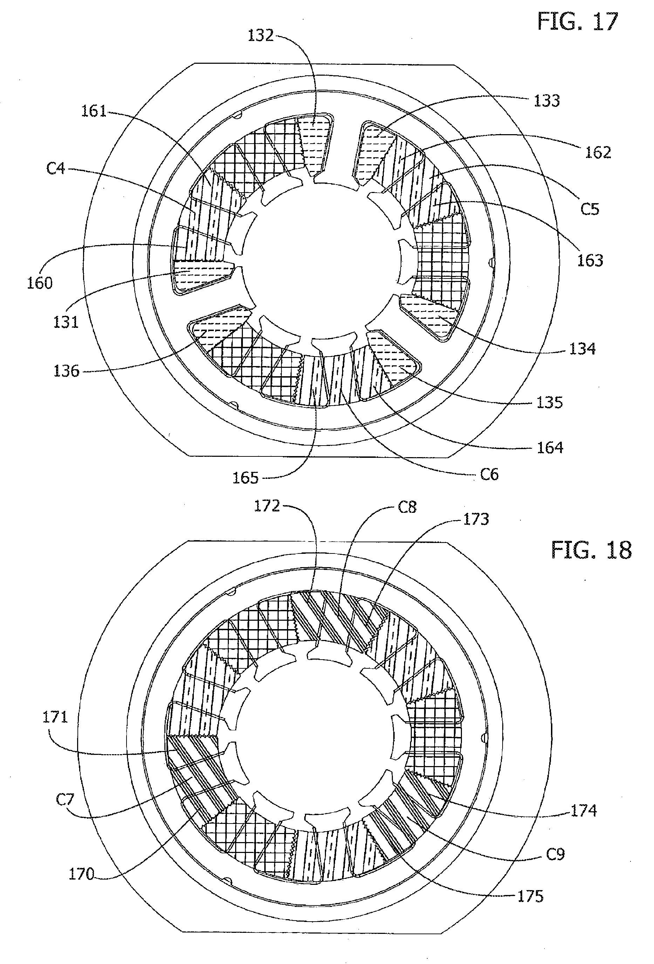

Successively, and prior to inserting further coils, forms 141 - 143 can be removed from the core by translating flange 140 in direction X. Then coil branches can be inserted in spacing 160 - 165 of the slots as a result of an insertion operation. As shown in figure 17, spacing 160 - 165 are either adjacent to forms 131 - 136 or to branches of the coils that have been inserted during the previous insertion operation. In figure 17, coil branches in spacing 160 and 161 form a single coil C4, branches in spacing 162 and 163 form a single coil C5 and branches in spacing 164 and 165 form a single coil C6.

Successively and prior to inserting further coils, forms 131 - 136 can be removed from the core by translating flange 130 in direction X. Then coil branches can be inserted in spacing 170 - 175 of the slots as a result of a further insertion operation. As shown in figure 18 spacing 170 - 175 are adjacent to previously inserted branches of the coils. In figure 18, coil branches in spacing 170 and 171 form a single coil C7, branches in spacing 172 and 173 form a single coil C8 and branches in spacing 174 and 175 form a single coil C9.

Naturally, while the principle of the invention remains the same, the details of construction and the embodiments may amply vary with respect to what has been described purely by way of example, without departing from the scope of the invention as defined in the claims.

## Claims

1. An apparatus for inserting coil branches (13a, 13b) of pre-wound wire coils and cover wedges (14) into slots (11) of a dynamoelectric machine core (10), the machine core having a bore (10'), the apparatus comprising:
a core mount (70 - 74) for supporting the core;
a first pusher assembly (50) having an insertion stroke for advancing through the bore parallel to the longitudinal axis (10") of the bore to insert the coil branches into the slots and wherein the first pusher assembly (50) comprises pushing surfaces (51-58) for pushing the coil branches (21', 26") entering the slots (C);
coil guides (60 - 63) configured to guide the coil branches during the insertion stroke.
a second pusher assembly (96, 97) configured to push the cover wedges (14) into the slots (11) along the coil branches;
cover wedge guides (70 - 74) configured to guide the cover wedges; wherein at least two coil branches (21', 26") of distinct coils are inserted into a slot (C),
the apparatus being **characterized in that** it further comprises radial arms (56', 57', 58') moveable in the radial direction (R) of the core (10) for entering the slots to push one of the distinct coil branches (26") towards the bottom of the slots and wherein a radial arm (56', 57', 58') moves in the radial direction (R) along one side of a pushing surface (56, 57, 58).

2. The apparatus of claim 1 wherein the first pusher assembly (50) comprises:
a first set of pushing surfaces (51, 52) located at a first level in a direction parallel to the longitudinal axis;
a second set of pushing surfaces (55, 53, 54) located at a second level in the direction parallel to the longitudinal axis (10"); and a third set of pushing surfaces (56, 57, 58) located at a third level in the direction parallel to the longitudinal axis (10"); wherein the pushing surfaces push the coil branches entering the slots; and wherein the second level is more forward in the insertion direction than the first level and the third level is more forward in the insertion direction than the second level.

3. The apparatus of claim 2 wherein a radial arm (56', 57', 58') moves in the radial direction (R) on one side of a pushing surface of the third set of pushing surfaces (56, 57, 58)

4. The apparatus of claim 2 wherein a branch (21") of a coil (21) is inserted in a slot (D) by pushing with a surface of the first set of pushing surfaces (51, 52) and a branch (24') of a further coil (24) is inserted in the same slot (D) by pushing with a surface of the second set of pushing surfaces (53, 54, 55).

5. The apparatus of claim 2 wherein a branch (24") of a coil (24) is inserted in a slot (E) by pushing with a surface of the second set of pushing surfaces (53, 54, 55) and a branch (27') of a further coil (27) is inserted in the same slot (E) by pushing with a surface of the third set of pushing surfaces (56, 57, 58).

6. The apparatus of claim 1 wherein the second pusher assembly comprises:
means (97, 100, 101) provided with a first sequence of motion for pushing a first group of cover wedges (30, 32, 33, 35, 36, 38) into respective slots during the insertion stroke; and
means (96, 102) provided with a second sequence of motion for pushing at least a second group of cover wedges (31, 34, 37) into respective slots during the same insertion stroke.

7. The apparatus of claim 6 wherein the means provided for the sequences are programmed to achieve that a considerable extent of the length of a cover wedge (31') is adjacent to a coil branch (23") when pushing is occurring of the coil branch (23" during the insertion stroke.

8. A method for inserting coil branches (13a, 13b) of pre-wound coils and cover wedges (14) into slots (11) of a dynamoelectric machine core (10), the machine core having a bore (10'), said method comprising:
advancing a pusher member (50) for an insertion stroke through said bore parallel to a longitudinal axis (10") of said bore to insert at least two distinct coil branches of the coils in the slots and pushing the coil branches (21', 26") entering the slots with pushing surfaces (**51**-58) of the first pusher assembly (50);
pushing and guiding cover wedges (30, 32, 33, 35, 36, 38) into the slots of the core during the insertion stroke;
**characterized in that** it further comprises the steps of moving radial arms (56', 57', 58')in the radial direction (R) of the core for entering the slots to push one of the distinct coil branches (26") towards the bottom of the slot; and moving a radial arm (56', 57', 58') in the radial direction (R) **along** one side of a pushing surface.

9. The method of claim 8 further comprising pushing coil branches (20', 20") entering the slots with pushing surfaces (51, 52)located at a first level (50) in a direction parallel to the longitudinal axis (10");
pushing coil branches (23', 23") entering the slots with pushing surfaces (53, 54, 55)located at a second level (50)in a direction parallel to the longitudinal axis (10") ;
pushing coil branches (26', 26") entering the slots with pushing surfaces (56, 57, 58) located at a third level (50)in a direction parallel to the longitudinal axis (10"); wherein the second level is more forward in the insertion direction than the first level and the third level is more forward in the insertion direction than the second level.

10. The method of claim 9 further comprising moving a radial arm (56', 57', 58') in the radial direction (R) on one side of a pushing surface located at the third level.

11. The method of claim 9 further comprising pushing a branch (21") of a coil (21) in a slot (D) with a surface of the set of pushing surfaces (51, 52) located at the first level; and pushing a branch (24') of a further coil (24) in the same slot (D) with a surface of the set of pushing surfaces (53, 54, 55) located at the second level.

12. The method of claim 9 further comprising pushing a branch (24") of a coil (24) in a slot (E) with a surface of the set of pushing surfaces (53, 54, 55) located at the second level; and pushing a branch (27') of a further coil (27) in the same slot (E) with a surface of the set of pushing surfaces (56,57,58) located at the third level.

13. The method of claim 8 comprising:
pushing with a first sequence of motion a first group of cover wedges (30, 32, 33, 35, 36, 38) into respective slots during the insertion stroke; and
pushing with a second sequence of motion at least a second group of cover wedges (31, 34, 37) into respective slots during the same insertion stroke.

14. The method of claim 13 comprising programming the sequences to achieve that a considerable extent of the length of a cover wedge (31') is adjacent to a coil branch (23") when pushing is occurring of the coil branch (23") during the insertion stroke.

## Patentansprüche

1. Vorrichtung zum Einbringen von Spulenabschnitten (13a, 13b) von vorgewickelten Drahtspulen und Deckkeilen (14) in Aufnahmen (11) eines dynamoelektrischen Maschinenkerns (10), wobei der Maschinenkern einen Durchgang (10') aufweist, wo-bei die Vorrichtung umfasst:
eine Kernbefestigung (70 - 74) zum Tragen des Kerns;
eine erste Schiebeanordnung (50) aufweisend einen Einbringtakt zum Bewegen durch den Durchgang parallel zu der Longitudinalachse (10") des Durchgangs, um die Spulenabschnitte in die Aufnahmen einzubringen, und wobei die erste Schiebeanordnung Schiebeoberflächen (51-58) zum Schieben der Spulenabschnitte (21', 26")umfasst, welche in die Aufnahmen (C) eingebracht werden;
Spulenführungen (60-63), welche ausgestaltet sind, um die Spulenabschnitte während des Einbringtakts zu führen;
eine zweite Schiebeanordnung (96, 97), welche ausgestalte ist, um die Deckkeile (14) in die Aufnahmen (11) entlang der Spulenabschnitte zu schieben;
Führungen (70-74) der Deckkeile, welche zur Führung der Deckkeile ausgestaltet sind; wobei mindestens zwei Spulenabschnitte (21', 26") von unterschiedlichen Spulen (C) in die Aufnahmen eingebracht werden,
wobei die Vorrichtung **dadurch gekennzeichnet ist, dass** sie des Weiteren radiale Arme (56', 57', 58') aufweist, welche in der Radialrichtung (R) des Kerns (10) zum Einbringen in die Aufnahmen beweglich sind, um eine der unterschiedlichen Spulenabschnitte (26") gegen den Boden der Aufnahmen zu schieben, wobei sich ein radialer Arm (56', 57', 58) in die Radialrichtung (R) entlang einer Seite einer Schiebeoberfläche (56, 57, 58) bewegt.

2. Vorrichtung gemäss Anspruch 1, wobei die erste Schiebeanordnung (50) umfasst:
einen ersten Satz von Schiebeoberflächen (51, 52), welche in einer ersten Höhe in einer Richtung parallel zu der Longitudinalachse angeordnet sind;
einen zweiten Satz von Schiebeoberflächen (55, 53, 54), welche in einer zweiten Höhe in der Richtung parallel zu der Longitudinalachse (10") angeordnet sind; und
einen dritten Satz von Schiebeoberflächen (56, 57, 58), welcher in einer dritten Höhe in der Richtung parallel zu der Longitudinalachse (10") angeordnet ist;
wobei die Schiebeoberflächen die Spulenabschnitte schieben, welche in die Aufnahmen eingebracht werden; und
wobei die zweite Höhe weiter vorne in der Einbringrichtung als die erste Höhe ist und die dritte Höhe weiter vorne in der Einbringrichtung als die zweite Höhe ist.

3. Vorrichtung gemäss Anspruch 2, wobei sich ein radialer Arm (56', 57', 58') in der Radialrichtung (R) an einer Seite einer Schiebeoberfläche des dritten Satzes von Schiebeoberflächen (56, 57, 58) bewegt.

4. Vorrichtung gemäss Anspruch 2, wobei ein Abschnitt einer Spule (21) in eine Aufnahme (D) durch Drücken mit einer Oberfläche des ersten Satze von Schiebeoberflächen (51, 52) eingebracht ist und ein Abschnitt (24') einer weiteren Spule (24) in derselben Aufnahme (D) durch Drücken mit einer Oberfläche des zweiten Satzes der Schiebeoberflächen (53, 54, 55) eingebracht ist.

5. Vorrichtung gemäss Anspruch 2, wobei ein Abschnitt (24 ") einer Spule (24) in eine Aufnahme (E) durch Drücken mit einer Oberfläche des zweiten Satzes von Schiebeoberflächen (53, 54, 55) eingebracht ist und ein Abschnitt (27') einer weiteren Spule (27) in dieselbe Aufnahme (E) durch Drücken mit einer Oberfläche des dritten Satzes von Schiebeoberflächen (56, 57, 58) eingebracht ist.

6. Die Vorrichtung gemäss Anspruch 1, wobei die zweite Schiebeanordnung umfasst:
Mittel (97, 100, 101) versehen mit einer ersten Sequenz von Bewegungen zum Drücken einer ersten Gruppe von Deckkeilen (30, 32, 33, 35, 36, 38) in entsprechende Aufnahmen während des Einbringtaktes; und
Mittel (96, 102) versehen mit einer zweiten Sequenz von Bewegungen zum Drücken mindestens einer zweiten Gruppe von Deckkeilen (31, 34, 37) in entsprechende Aufnahmen während desselben Einbringtaktes.

7. Vorrichtung gemäss Anspruch 6, wobei die für die Sequenzen bereitgestellten Mittel programmiert sind, um zu erreichen, dass ein wesentliches Ausmass der Länge eines Deckkeils (31') zu einem Spulenabschnitt (23") benachbart ist, wenn das Drücken des Spulenstranges (23") während des Einbringtaktes geschieht.

8. Verfahren zum Einbringen von Spulenabschnitten (13a, 13b) von vorgewickelten Drahtspulen und Deckkeilen (14) in Aufnahmen (11) eines dynamoelektrischen Maschinenkerns (10), wobei der Maschinenkern einen Durchgang (10') aufweist, wobei das Verfahren die folgenden Schritte umfasst:
Bewegen eines Schiebeelements (50) für einen Einbringtakt durch den Durchgang parallel zu einer Längsachse der Bohrung zum Einbringen von wenigstens zwei unterschiedlichen Spulenabschnitten der Spulen in die Aufnahmen und Drücken der Spulenabschnitte (21', 26"), welche in die Aufnahmen eingebracht werden mit Schiebeoberflächen (51-58) der ersten Schiebeanordnung (50);
Drücken und Führen von Deckkeilen (30, 32, 33, 34, 36, 38) in die Aufnahmen des Kerns während des Einbringtaktes;
**dadurch gekennzeichnet, dass** es des Weiteren die Schritte umfasst:
Bewegen der radialen Arme (56', 57', 58') in die Radialrichtung (R) des Kerns zum Einbringen in die Aufnahmen zum Drücken einer der unterschiedlichen Spulenabschnitte (26") gegen den Boden der Aufnahme; und
Bewegen eines radialen Arms (56', 57', 58') in die Radialrichtung (R) entlang einer Seite einer Schiebeoberfläche.

9. Verfahren gemäss Anspruch 8 umfassend die Schritte Drücken der Spulenabschnitte (20', 20"), welche in die Aufnahmen eintreten, mit Schiebeoberflächen (51, 52), welche in einer ersten Höhe (50) in einer Richtung parallel zu der Longitudinalachse (10") angeordnet sind;
Drücken der Spulenabschnitte (23', 23"), welche in die Aufnahmen eintreten, mit Schiebeoberflächen (53, 54, 55), welche in einer zweiten Höhe (50) in einer Richtung parallel zu der Longitudinalachse (10") angeordnet sind;
Drücken der Spulenstränge (26', 26"), welche in die Aufnahmen eindringen, mit Schiebeoberflächen (56, 57, 58), welche in einer dritten Höhe (50) in einer Richtung parallel zu der Longitudinalachse (10") angeordnet sind; wobei die zweite Höhe weiter vorne in der Einbringrichtung als die erste Höhe ist und die dritte Höhe weiter vorne in der Einbringrichtung als die zweite Höhe ist.

10. Verfahren gemäss Anspruch 9 weiter umfassend den Schritt Bewegen eines radialen Arms (56', 57', 58') in Radialrichtung (R) an einer Seite der Schiebeoberfläche, welche in der dritten Höhe angeordnet ist.

11. Verfahren gemäss Anspruch 9 weiter umfassend die Schritte Drücken eines Abschnittes (21") einer Spule (21) in eine Aufnahme (D) mit einer Oberfläche des Satzes von Schiebeoberflächen (51, 52), welche in der ersten Höhe angeordnet sind; und
Schieben eines Abschnittes (24') einer weiteren Spule (24) in dieselbe Aufnahme (D) mit einer Oberfläche des Satzes von Schiebeoberflächen (53, 54, 55), welche in der zweiten Höhe angeordnet sind.

12. Verfahren gemäss Anspruch 9 weiter umfassend die Schritte Drücken eines Abschnittes (24") einer Spule (24) in eine Aufnahme (E) mit einer Oberfläche des Satzes von Schiebeoberflächen (53, 54, 55), welche in der zweiten Höhe angeordnet sind; und
Drücken eines Abschnittes (27') einer weiteren Spule (27) in dieselbe Aufnahme (E) mit einer Oberfläche des Satzes von Schiebeoberflächen (56, 57, 58), welche in der dritten Höhe angeordnet sind.

13. Verfahren gemäss Anspruch 8 umfassend die Schritte Drücken einer ersten Gruppe von Deckkeilen (30, 32, 33, 35, 36, 38) in entsprechende Aufnahmen während des Einbringtaktes mit einer ersten Sequenz von Bewegungen; und
Drücken mindestens einer zweiten Gruppe von Deckkeilen (31, 34, 37) in entsprechende Aufnahmen während desselben Einbringtaktes mit einer zweiten Sequenz von Bewegungen.

14. Verfahren gemäss Anspruch 13 umfassend
Programmieren der Sequenzen, um zu erreichen, dass ein wesentliches Ausmass der Länge eines Deckkeils (31') zu einem Spulenabschnitt (23") benachbart ist, wenn das Drücken des Spulenstranges (23 ") während des Einbringtaktes geschieht.

## Revendications

1. Appareil pour insérer des branches de spires (13a, 13b) de spires de fil métallique pré-enroulées et des cales de couverture (14) dans des fentes (11) d'un noyau de machine dynamoélectrique (10), le noyau de machine ayant un alésage (10'), l'appareil comprenant :
un élément de montage de noyau (70-74) destinée à supporter le noyau ;
un premier ensemble poussoir (50) ayant une course d'insertion pour avancer à travers l'alésage parallèlement à l'axe longitudinal (10") de l'alésage pour insérer les branches de spires dans les fentes et dans lequel le premier ensemble poussoir (50) comprend des surfaces de poussée (51-58) pour pousser les branches de spires (21', 26") entrant dans les fentes (C) ;
des guides de spires (60-63) configurés pour guider les branches de spires au cours de la course d'insertion ;
un deuxième ensemble poussoir (96, 97) configuré pour pousser les cales de couverture (14) dans les fentes (11) le long des branches de spires ;
des guides de cales de couverture (70-74) configurés pour guider les cales de couverture ; dans lequel au moins deux branches de spires (21', 26") de spires distinctes sont insérées dans une fente (C),
l'appareil étant **caractérisé en ce qu'**il comprend en outre des bras radiaux (56', 57', 58') mobiles dans la direction radiale (R) du noyau (10) pour entrer dans les fentes afin de pousser l'une des branches de spires distinctes (26") vers le fond des fentes et dans lequel un bras radial (56', 57', 58') se déplace dans la direction radiale (R) le long d'un côté d'une surface de poussée (56, 57, 58).

2. Appareil de la revendication 1, dans lequel le premier ensemble poussoir (50) comprend :
un premier ensemble de surfaces de poussée (51, 52) situé à un premier niveau dans une direction parallèle à l'axe longitudinal ;
un deuxième ensemble de surfaces de poussée (55, 53, 54) situé à un deuxième niveau dans la direction parallèle à l'axe longitudinal (10") ; et un troisième ensemble de surfaces de poussée (56, 57, 58) situé à un troisième niveau dans la direction parallèle à l'axe longitudinal (10") ; dans lequel les surfaces de poussée poussent les branches de spires entrant dans les fentes ; et dans lequel le deuxième niveau est plus en avant dans la direction d'insertion que le premier niveau et le troisième niveau est plus en avant dans la direction d'insertion que le deuxième niveau.

3. Appareil de la revendication 2, dans lequel un bras radial (56', 57', 58') se déplace dans la direction radiale (R) sur un côté d'une surface de poussée du troisième ensemble de surfaces de poussée (56, 57, 58).

4. Appareil de la revendication 2, dans lequel une branche (21") d'une spire (21) est insérée dans une fente (D) en poussant avec une surface du premier ensemble de surfaces de poussée (51, 52) et une branche (24') d'une autre spire (24) est insérée dans la même fente (D) en poussant avec une surface du deuxième ensemble de surfaces de poussée (53, 54, 55).

5. Appareil de la revendication 2, dans lequel une branche (24") d'une spire (24) est insérée dans une fente (E) en poussant avec une surface du deuxième ensemble de surfaces de poussée (53, 54, 55) et une branche (27') d'une autre spire (27) est insérée dans la même fente (E) en poussant avec une surface du troisième ensemble de surfaces de poussée (56, 57, 58).

6. Appareil de la revendication 1, dans lequel le deuxième ensemble poussoir comprend :
des moyens (97, 100, 101) munis d'une première séquence de mouvement pour pousser un premier groupe de cales de couverture (30, 32, 33, 35, 36, 38) dans des fentes respectives au cours de la course d'insertion ; et
des moyens (96, 102) munis d'une deuxième séquence de mouvement pour pousser au moins un deuxième groupe de cales de couverture (31, 34, 37) dans des fentes respectives au cours de la même course d'insertion.

7. Appareil de la revendication 6 dans lequel les moyens fournis pour les séquences sont programmés pour assurer qu'une étendue considérable de la longueur d'une cale de couverture (31') est adjacente à une branche de spire (23") lorsque la poussée de la branche de spire (23") se produit au cours de la course d'insertion.

8. Procédé pour insérer des branches de spires (13a, 13b) de spires pré-enroulées et des cales de couverture (14) dans des fentes (11) d'un noyau de machine dynamoélectrique (10), le noyau de machine ayant un alésage (10'), ledit Procédé comprenant le fait :
de faire avancer un élément de poussée (50) pendant une course d'insertion à travers ledit alésage parallèlement à un axe longitudinal (10") dudit alésage pour insérer au moins deux branches de spires distinctes des spires dans les fentes et de pousser les branches de spires (21', 26") entrant dans les fentes avec des surfaces de poussée (51-58) du premier ensemble de poussée (50) ;
de pousser et de guider des cales de couverture (30, 32, 33, 35, 36, 38) dans les fentes du noyau au cours de la course d'insertion ;
**caractérisé en ce qu'**il comprend en outre les étapes qui consistent à déplacer des bras radiaux (56', 57', 58') dans la direction radiale (R) du noyau pour entrer dans les fentes afin de pousser l'une des branches de spires distinctes (26") vers le fond de la fente ; et à déplacer un bras radial (56', 57', 58') dans la direction radiale (R) le long d'un côté d'une surface de poussée.

9. Procédé de la revendication 8, comprenant en outre le fait de pousser des branches de spires (20', 20") entrant dans les fentes avec des surfaces de poussée (51, 52) situées à un premier niveau (50) dans une direction parallèle à l'axe longitudinal (10") ;
de pousser des branches de spires (23', 23") entrant dans les fentes avec des surfaces de poussée (53, 54, 55) situées à un deuxième niveau (50) dans une direction parallèle à l'axe longitudinal (10") ;
de pousser des branches de spires (26', 26") entrant dans les fentes avec des surfaces de poussée (56, 57, 58) situées à un troisième niveau (50) dans une direction parallèle à l'axe longitudinal (10") ; dans lequel le deuxième niveau est plus en avant dans la direction d'insertion que le premier niveau et le troisième niveau est plus en avant dans la direction d'insertion que le deuxième niveau.

10. Procédé de la revendication 9, comprenant en outre le fait de déplacer un bras radial (56', 57', 58') dans la direction radiale (R) sur un côté d'une surface de poussée située au troisième niveau.

11. Procédé de la revendication 9, comprenant en outre le fait
de pousser une branche (21") d'une spire (21) dans une fente (D) avec une surface de l'ensemble de surfaces de poussée (51, 52) situé au premier niveau ; et de pousser une branche (24') d'une autre spire (24) dans la même fente (D) avec une surface de l'ensemble de surfaces de poussée (53, 54, 55) situé au deuxième niveau.

12. Procédé de la revendication 9, comprenant en outre le fait
de pousser une branche (24") d'une spire (24) dans une fente (E) avec une surface de l'ensemble de surfaces de poussée (53, 54, 55) situé au deuxième niveau ; et de pousser une branche (27') d'une autre spire (27) dans la même fente (E) avec une surface de l'ensemble de surfaces de poussée (56, 57, 58) situé au troisième niveau.

13. Procédé de la revendication 8, comprenant le fait :
de pousser avec une première séquence de mouvement un premier groupe de cales de couverture (30, 32, 33, 35, 36, 38) dans des fentes respectives au cours de la course d'insertion ; et
de pousser avec une deuxième séquence de mouvement au moins un deuxième groupe de cales de couverture (31, 34, 37) dans des fentes respectives au cours de la même course d'insertion.

14. Procédé de la revendication 13, comprenant le fait de programmer les séquences pour assurer qu'une étendue considérable de la longueur d'une cale de couverture (31') est adjacente à une branche de spire (23") lorsque la poussée de la branche de spire (23") se produit au cours de la course d'insertion.
